# EUROPÄISCHE PATENTSCHRIFT

(11) **EP 3 036 173 B1**
(45) Veröffentlichungstag und Bekanntmachung des Hinweises auf die Patenterteilung: **27.09.2023**
(21) Anmeldenummer: 14747301.1
(22) Anmeldetag: 02.08.2014
(51) Int. Cl.: B65D 43/16, B65D 1/10

(54) **IN EINEM EXTRUSIONSBLASVERFAHREN HERGESTELLTER KUNSTSTOFFWEITHALSBEHÄLTER FÜR SCHÜTTGUT MIT EINEM VERSCHLUSSAUFSATZ**
WIDE-NECK PLASTIC CONTAINER FOR BULK MATERIAL, PRODUCED USING AN EXTRUSION BLOW MOULDING METHOD AND HAVING A CLOSURE CAP
RÉCIPIENT À COL LARGE EN MATIÈRE PLASTIQUE POUR PRODUIT EN VRAC FABRIQUÉ PAR EXTRUSION-SOUFFLAGE AVEC UN COUVERCLE DE FERMETURE

(30) Priorität: 21.08.2013 CH 14322013
(43) Veröffentlichungstag der Anmeldung: 29.06.2016
(73) Patentinhaber: Alpla Werke Alwin Lehner GmbH & Co. KG, 6971 Hard (AT)
(72) Erfinder: KUENZ, Johann, A-6971 Hard (AT); WESTHOFEN, Christa, A-6850 Dornbirn (AT); GARCIA GRANADOS, Israel, A-6858 Schwarzach (AT)
(74) Vertreter: Bohest AG Branch Ostschweiz
(86) Internationale Anmeldenummer: PCT/EP2014/002134
(87) Internationale Veröffentlichungsnummer: WO 2015/024631

(56) Entgegenhaltungen:
- DE-A1-102006 031 599
- FR-A1- 2 434 083
- US-A- 3 907 146
- US-A1- 2002 017 501
- US-A1- 2005 077 282
- US-A1- 2009 101 647
- US-A1- 2010 308 066
- US-A1- 2011 192 847
- US-A1- 2012 219 734

## Beschreibung

Die Erfindung betrifft einen in einem Extrusionsblasverfahren hergestellten Kunststoffweithalsbehälter für Schüttgut mit einem Verschlussaufsatz gemäss dem Oberbegriff des Patentanspruchs 1.

Die in der Vergangenheit üblichen Behälter aus Weiss- oder Buntblech, aus Glas oder auch aus Keramik werden in zunehmendem Masse von Behältern aus Kunststoff abgelöst. Insbesondere für die Verpackung fluider Substanzen, beispielsweise Schüttgut für Anwendungen im Haushalt, in Landwirtschaft, Industrie und Gewerbe etc., kommen neuerdings hauptsächlich Kunststoffweithalsbehälter zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffweithalsbehältern bei den Anwendern zu fördern.

Ein- oder mehrschichtige Kunststoffweithalsbehälter werden oft im sogenannten Extrusionsblasverfahren, insbesondere einem Schlauchblasverfahren, hergestellt. Die für das Extrusionsblasverfahren eingesetzten Extrusionsblasmaschinen besitzen in der Regel einen oder mehrere Extruder zur Zuführung des benötigten Kunststoffmaterials. Der Ausgang des Extruders ist mit einem Extruderkopf verbunden, an dessen vorzugsweise in der Öffnungsweite regulierbarer Austrittsdüse der extrudierte Schlauch austritt. Der extrudierte Kunststoffschlauch kann ein- oder mehrschichtig aufgebaut sein. Der aus der Austrittsdüse kontinuierlich oder quasi-kontinuierlich austretende Schlauch wird an eine Blasformwerkzeuganordnung übergeben und mit Hilfe eines in den Formhohlraum eingefahrenen Blasdorns durch Überdruck aufgeblasen. Danach wird der aufgeblasene Kunststoffweithalsbehälter aus der Formkavität entformt. Schüttgut, wie beispielsweise Zucker, Mehl, Kaffee, Pulver für Instant-Getränke, Milchpulver, Kleinkindnahrung usw. werden vielfach in Kunststoffweithalsbehältern aufbewahrt, die eine grosse Öffnung in Relation zu einem Umfang am Übergang der Behälterschulter zum Behälterkörper aufweisen, damit die Entnahme des Schüttguts, beispielsweise mit einem Dosierlöffel erleichtert ist. Der die Öffnung aufweisende Behälterhals kann einen rotationssymmetrischen, beispielsweise kreisförmigen, quadratischen, rechteckigen oder ovalen Querschnitt aufweisen. Es versteht sich, dass aufgrund des Fertigungsprozesses die "Ecken" eines quadratischen oder rechteckigen Halsabschnitts eigentlich verrundet ausgebildet sind, d.h. einen Radius aufweisen. In der Regel wird auf den Rand der Öffnung eine Siegelfolie aufgebracht, beispielsweise aufgeklebt oder aufgeschweisst, um das Behälterinnere zu verschliessen. Die Öffnung wird schliesslich von einem Verschlussaufsatz abgedeckt, der auf das offene Ende des Kunststoffweithalsbehälters üblicherweise aufgepresst wird. Dabei hintergreifen von einer Innenwandung des Verschlussaufsatzes abragende Verriegelungsmittel korrespondierende Arretiermittel, die unterhalb der Öffnung an der Aussenwandung des Behälterhalses angeformt sind. Bei einem bekannten Kunststoffweithalsbehälter sind die von der Innenwandung des Verschlussabsatzes abragenden Verriegelungsmittel zu einer einzigen, ringförmig umlaufenden Rippe zusammengefasst. In analoger Weise sind auch die Arretiermittel an der Aussenwandung des Behälterhalses als ein ringförmig umlaufender Arretiervorsprung ausgebildet. Der eigentliche Verschluss kann beispielsweise als ein schwenkbares Deckelteil oder dergleichen ausgebildet sein, das beispielsweise an der Oberseite des Verschlussaufsatzes angelenkt ist. Ein gattungsgemässer Kunststoffbehälter ist beisplieseweise aus der US 3 907 146 A, US2010/308066A1, US2012/219734A1, oder FR2434083A1 bekannt.

Bei Kunststoffweithalsbehältern mit einem kreisförmigen Querschnitt des Behälterhalses ist in der Regel eine ausreichend gute Verriegelung des Verschlussaufsatzes auf dem Behälterhals gewährleistet. Auch erleichtert der rotationssymmetrische Behälterhals die Montage des Verschlussaufsatzes, indem die relative Ausrichtung der Teile zueinander in der Regel keine Rolle spielt. Bei Kunststoffweithalsbehältern mit einem rechteckigen oder ovalen Behälterhals hingegen muss der Verschlussaufsatz für die Montage korrekt ausgerichtet sein, damit dieser beim Aufpressen nicht verkantet. Ausserdem kann der Verschlussaufsatz durch Verdrehen gegenüber dem Behälter wieder relativ einfach vom Behälter gelöst werden. Dies ist natürlich in Anwendungsfällen, in denen eine Manipulationssicherheit gewährleistet sein muss, inakzeptabel. Der Abnehmer eines Produktes, das in den Kunststoffweithalsbehälter abgefüllt ist, muss sich darauf verlassen können, dass der Behälterinhalt in der vom Abfüller bereitgestellten Qualität vorliegt und es zu keinen Manipulationen des Inhalts gekommen ist. Daher sind bei solchen Kunststoffweithalsbehältern üblicherweise zusätzliche Verdrehsicherungen vorgesehen. Diese müssen jedoch sehr exakt und lagegenau gefertigt sein, damit auch im ungünstigsten Fall der Fertigungstoleranzen des Behälterhalses und des Verschlussaufsatzes das Spiel zwischen den beiden Teilen so klein bleibt, dass eine sichere Fixierung des Verschlussaufsatzes auf dem Behälterhals gewährleistet ist. Daraus ergeben sich für die Werkzeuge für die Herstellung des Verschlussaufsatzes und für die Blasformwerkzeuge für die Herstellung des Kunststoffweithalsbehälters sehr hohe Anforderungen, die sich unmittelbar in erhöhten Werkzeugkosten niederschlagen.

Aufgabe der vorliegenden Erfindung ist es daher, einen in einem Extrusionsblasverfahren hergestellten Kunststoffweithalsbehälter und einen zugehörigen Verschlussaufsatz dahingehend zu verbessern, dass auch bei nicht rotationssymmetrisch ausgebildetem Behälterhals eine einfache, lagegenaue Montage des Verschlussaufsatzes ermöglicht ist. Als Kunststoffweithalsbehälter im Sinne der Erfindung wird dabei ein Behälter angesehen, dessen vom Öffnungsrand umschlossene Öffnungsfläche grösser ist als 30% einer Behälterfläche, die von einem Umfang am Übergang von der Behälterschulter zum Behälterkörper umschlossen ist. Bevorzugt weist die Öffnungsfläche 50% - 60% der Behälterfläche auf. Die Entnahmeöffnung ist dabei zweckmässigerweise derart bemessen, dass ein in dem Behälter bevorratetes Gut, insbesondere Schüttgut, mittels einer zur Entnahme geeigneten Vorrichtung, wie beispielsweise einem Löffel, der auch als eine Dosierlöffel ausgebildet sein kann, bequem aus dem Behälter entnehmbar ist. Vorzugsweise muss dazu die Lage des Behälters zur Entnahme des Inhalts nicht verändert werden, d.h. muss der Behälter zur Entnahme des darin bevorateten Guts nicht gekippt werden. Ein auf dem Behälterhals eines Kunststoffweithalsbehälters montierter Verschlussaufsatz soll sicher in seiner montierten Lage verbleiben und nur durch Zerstörung von Verriegelungselementen demontierbar sein. Dadurch soll sicher gestellt sein, dass eine Manipulation an dem am Behälterhals montierten Verschlussteil leicht feststellbar ist. Die Herstellung des Kunststoffweithalsbehälters und des zugehörigen Verschlussaufsatzes soll keine übermässig aufwendig gestaltete Werkzeuge erfordern.

Die Lösung dieser teils widersprüchlichen Aufgaben besteht in einem in einem Extrusionsblasverfahren hergestellten Kunststoffweithalsbehälter mit einem Verschlussaufsatz, welcher die im Patentanspruch 1 aufgelisteten Merkmale aufweist. Weiterbildungen und/oder vorteilhafte Ausführungsvarianten der Erfindung sind Gegenstand der abhängigen Patentansprüche.

Durch die Erfindung wird ein in einem Extrusionsblasverfahren hergestellter Kunststoffweithalsbehälter für Schüttgut mit einem Verschlussaufsatz geschaffen, der auf einen eine Behälteröffnung aufweisenden Behälterhals montierbar und mit diesem verbindbar ist, wobei ein sich im wesentlichen axial erstreckender Abschnitt des Mantels des Verschlussaufsatzes an eine Aussenwandung eines Körpers des Kunststoffweithalsbehälters anschliesst. An einer Aussenwandung des Behälterhalses ist eine Anzahl Verriegelungsvorsprünge angeordnet, die über einen Umfang des Behälterhalses verteilt sind und von der Aussenwandung des Behälterhalses abragen. Der Verschlussaufsatz weist zu den Verriegelungsvorsprüngen korrespondierende Verriegelungsaufnahmen auf, die von einer Innenwandung seines Mantels abragen. Bei der Montage des Verschlussaufsatzes auf den Behälterhals sind die Verriegelungsvorsprünge mit den Verriegelungsaufnahmen in Eingriff bringbar, dass sie unlösbar miteinander verbunden sind. Bei einem auf dem Behälterhals montiertem Verschlussaufsatz sind die zusammenwirkenden Verriegelungselemente von aussen unzugänglich.

Die ineinander greifenden Verriegelungsvorsprünge und Verriegelungsaufnahmen bilden eine unlösbare Verriegelung und wirken gleichzeitig auch als eine Verdrehsicherung. Dadurch ist auch bei nicht rotationssymmetrischen Behälterhälsen und Verschlussaufsätzen ein einfaches Demontieren des Verschlussaufsatzes durch relatives Verdrehen des Verschlussaufsatzes zum Behälterhals verhindert. Der montierte Verschlussaufsatz ist nur durch Zerstörung eines oder mehrerer der Verriegelungselemente wieder abnehmbar, da diese durch das Zusammenwirken des Behälterhalses, der Aussenwandung des Behälterkörpers und des Mantels des Verschlussaufsatzes von aussen unzugänglich sind und demnach auch nicht mehr voneinander gelöst werden können. Nach der Zerstörung eines oder mehrerer der Verriegelungselemente ist der Verschlussaufsatz jedoch nicht mehr auf dem Behälterhals fixierbar. Dadurch kann eine allfällige Manipulation am Behälter leicht festgestellt werden.

In einer Variante der Erfindung weisen die Aussenwandung des Behälterhalses wenigstens ein erstes Zentrierelement und der Verschlussaufsatz wenigstens ein zweites, von seinem Mantel abragendes Zentrierelement auf, die miteinander korrespondieren. Die miteinander korrespondierrenden ersten und zweiten Zentrierelemente erleichtern die Ausrichtung des Verschlussaufsatzes und dadurch die lagegenaue Positionierung der Verriegelungselemente bei der Montage des Verschlussaufsatzes auf den Behälterhals. Die miteinander zusammenwirkenden Zentrierelemente können auch als eine Drehsperre wirken, die eine relative Verdrehung des Verschlussaufsatzes gegenüber dem Behälterkörper verhindern. Hierdurch können die miteinander verrasteten Verriegelungslemente von Aufgabe der Drehverhinderung teilweise oder ganz entlastet sein. Die ersten Zentrierelemente am Behälterhals können als Zentriervorsprünge oder als gegenüber der Aussenwandung des Behälterhalses vertiefte Zentrieraufnahmen ausgebildet sein. Entsprechend können die zweiten Zentrierelemente am Verschlussaufsatz als korrespondierende Zentrieraufnahmen oder als Zentriervorsprünge ausgebildet sein. Die Zentrierelemente können auch derart ausgebildet sein, dass bei Beginn der Montage der Verschlussaufsatz in Bezug auf den Behälterhals vorzentriert wird. Bei der weiteren Montage ist dann der Verschlussaufsatz in Bezug auf den Behälterkörper drehbar, bis er die korrekte Lage erreicht hat und er am Ende der Montage gegenüber dem Behälterkörper nicht mehr verdrehbar ist.

Die lagegenaue Montage des Verschlussaufsatzes kann in einer Variante der Erfindung dadurch erleichtert werden, dass am Behälterhals eine Anzahl von ersten Zentrierelementen angeordnet ist, die mit einer entsprechenden Anzahl von korrespondierenden zweiten Zentrierelementen am Verschlussaufsatz zusammenwirkt.

Eine Ausführungsvariante der Erfindung kann vorsehen, dass die Verriegelungsvorsprünge und die ersten Zentrierelemente wenigstens bereichsweise abwechselnd entlang des Umfangs des Behälterhalses angeordnet sind. Die korrespondierenden Verriegelungsaufnahmen und die korrespondierrenden zweiten Zentrierelemente sind dann wenigstens bereichsweise abwechselnd an der Innenwandung des Mantels des Verschlussaufsatzes vorgesehen sind. Bei einer derartigen Anordnung ist eine bestmögliche Zentrierung und Fixierung des Verschlussaufsatzes auf dem Behälterhals gewährleistet.

Eine weitere Ausführungsvariante der Erfindung sieht vor, dass der bzw. die ersten Zentrierelemente an der Aussenwandung des Behälterhalses als Zentriervorsprung bzw. Zentriervorsprünge ausgebildet sind. Das korrespondierende Zentrierelement bzw. die zweiten Zentrierelemente am Verschlussaufsatz sind entsprechend als Zentrieraufnahmen ausgebildet.

Die Erfindung sieht vor, dass die Verriegelungsvorsprünge jeweils als sich in Umfangsrichtung erstreckende Verriegelungsleisten ausgebildet sind, die mit fensterartigen Aussparungen in einer von der Innenwandung des Verschlussabsatzes abragenden Schürze zusammenwirken. Die von der Innenwandung abragende Schürze kann im wesentlichen L-förmig ausgebildet sein. Dabei ist ein erster L-Schenkel unlösbar mit der Innenwandung des Verschlussaufsatzes verbunden. Der zweite L-Schenkel erstreckt sich im wesentlichen entlang des Behälterhalses und im wesentlichen parallel zu und im Abstand vom Mantel des Verschlussaufsatzes. Die Umfangserstreckung der Verriegelungsleisten und die Weite der Aufnahmefenster in Umfangsrichtung sind derart aufeinander abgestimmt, dass praktisch keine Verdrehung des Verschlussaufsatzes gegenüber dem Behälterkörper möglich ist. Die Verriegelungsleisten am Behälterhals und die Aufnahmefenster in der von der Innenwandung des Verschlussabsatzes abragenden Schürze sind im montierten Zustand des Verschlussaufsatzes vom Mantel desselben verdeckt. Da der freie Rand des Mantels im wesentlichen bündig an die Aussenwandung des Kunststoffweithalsbehälters anschliesst bzw. diesen überdeckt, ist ein Zugriff auf die Verriegelungselemente praktisch unterbunden. Auch mit einem Werkzeug, beispielsweise mit einem Messer oder mit der Klinge eines Schraubendrehers, sind die Verriegelungselemente von aussen ohne Zerstörung des Mantels nicht erreichbar. Dies erleichtert noch zusätzlich das Erkennen einer allfälligen Manipulation des Behälters bzw. des Verschlussaufsatzes.

Die Anordnung der miteinander verrasteten Verriegelungselemente ist derart gewählt, dass diese im montierten Zustand auch durch den geöffneten Deckel des Verschlussaufsatzes nicht erreichbar sind. Eine Abnahme des Verschlussaufsatzes ist nur unter Zerstörung wenigstens eines der Verriegelungselemente möglich. Dadurch ist dieser jedoch nicht wieder auf dem Behälter fixierbar, und eine Manipulation des Behälter ist unmittelbar ersichtlich. Der Verschlussaufsatz kann auch noch derart ausgebildet sein, dass ein Deckel mit einem Kragen, der den Mantel und die Schürze umfasst, verbunden ist. Der Deckel ist aus einer ersten Lage, in der er den Zugriff auf das Behälterinnere verhindert, in eine zweite Stellung verlagerbar, in der ein Zugriff durch die Behälteröffnung auf ein in den Kunststoffweithalsbehälter abgefülltes Produkt ermöglicht ist.

In einer Ausführungsvariante der Erfindung können die Verriegelungsleisten im Axialschnitt eine im wesentlichen dreieckige Gestalt aufweisen. Dabei setzen sich die Verriegelungsleisten aus einer im wesentlichen radial verlaufenden Sperrfläche und einer Rampenfläche zusammen. Die Rampenfläche erstreckt sich von einem maximalen radialen Überstand der Verriegelungsleiste gegenüber der Aussenwandung des Behälterhalses schräg in Richtung der Behälteröffnung. Die Rampenflächen erleichtern die Montage des Verschlussaufsatzes, indem der Rand der Schürze entlang den Rampenflächen geführt wird, bis die Verriegelungsleisten durch die Aufnahmefenster gleiten, um mit diesen verriegelnd zusammenzuwirken. Der Umfang der dem Behälterhals zugewandten Seite der Schürze ist grösser als der Umfang der Aussenwandung des Behälterhalses, aber geringer als der maximale Überstand der Verriegelungsleisten. Während bei der Montage des Verschlussaufsatzes der Rand der Schürze entlang der Rampenflächen gleitet, wird sein Umfang vergrössert, indem die Schürze elastisch aufgeweitet wird. Infolge der inhärenten Elastizität der Schürze stellt sich der ursprüngliche Umfang wieder ein, sobald die Aufnahmefenster über die Verriegelungsleisten geglitten sind.

Damit die bei der Montage des Verschlussaufsatzes auf den Behälterhals des Kunststoffweithalsbehälters aufzubringenden Kräfte in einer vernünftigen Grössenordnung verbleiben, schliessen die schräge Rampenfläche und die im wesentlichen radiale Sperrfläche jeder Verriegelungsleiste miteinander einen Winkel ein, der etwa 25° bis etwa 75° beträgt. Die Verriegelungsleisten weisen dabei gegenüber der Aussenfläche des Halses des Kunststoffweithalsbehälters einen maximalen radialen Überstand auf, der etwa 0,5 mm bis etwa 5 mm beträgt.

Zur Erleichterung der Montage des Verschlussaufsatzes auf dem Behälterhals des Kunststoffweithalsbehälters kann in einer weiteren Ausführungsvariante der Erfindung die Schürze durch sich axial erstreckende Einschnitte in laschenartige Segmente unterteilt sein, wobei vorzugsweise jedes Segment eine fensterartige Aussparung aufweist. Die Unterteilung der mit dem Mantel des Verschlussaufsatzes fest verbundenen und von diesem beabstandeten Schürze in laschenartige Segmente erleichtert bei der Montage vorrübergehende Umfangsvergrösserung. Dadurch wird weniger Kraft benötigt um den Verschlussaufsatz auf den Behälter zu montieren. Schliesslich kann auch noch vorgesehen sein, dass die sich axial erstreckenden Einschnitte wenigstens zum Teil die Zentrieraufnahmen bilden. Dadurch kann die Anzahl von axialen Einschnitten reduziert und eine übermässige Schwächung der Formstabilität der Schürze verhindert werden.

Gemäss einem weiteren Ausgestaltungsbeispiel der Erfindung sind die Einschnitte derart angeordnet und ausgeführt, dass bei der Montage des Verschlussaufsatzes auf den Behälterhals jedes Segment unabhängig von seinen benachbarten Segmenten von einer ersten Position in eine zweite Position elastisch reversibel verlagerbar ist. In der ersten Position ist der Verschlussaufsatz zur Montage auf den Behälterhals vorbereitet. In der zweiten Position ist das Segment während der Montage des Verschlussaufsatzes auf den Behälterhals durch einen Verriegelungsvorsprung in Richtung des Mantels maximal radial ausgelenkt. Dadurch, dass jedes Segment für sich und unbeeinflusst durch die benachbarten Segmente ausgelenkt werden kann, werden die Prellkräfte zum Aufbringen des Verschlussaufsatzes auf den Behälterkörper minimiert. Zudem kann sich jedes Segment individuell entlang der Außenwandung des Behälterhalses erstrecken. Somit können durch die Segmentierung Fertigungstoleranzen der Schürze und des Behälterhalses kompensiert werden. Weiters können die Segmente so gestaltet sein, dass diese in montiertem Zustand unter Vorspannung an der Außenwandung des Behälterhalses anliegen. Hierdurch kann der Verschlussaufsatz in radialer Richtung spielfrei an dem Behälter fixiert sein.

Gemäss einem weiteren Ausgestaltungsbeispiel der Erfindung weist die Zentrieraufnahme eine im Wesentlichen gleichschenklige dreieckige Kontur auf, wobei die beiden gleichlangen Schenkel eine Spitze des Dreiecks ausbilden, die entgegen einer Montagerichtung des Verschlussaufsatzes auf den Behälterhals orientiert ist. Hierbei kann der Zentriervorsprung beispielsweise als vorspringendes Dreieck oder als Zylinderstift ausgebildet sein. Die Zentrierung erfolgt, wenn die Mantelfläche des Zylinders oder die Schenkel des vorspringenden Dreiecks an den Schenkeln des ersten Zentrierelements anliegen.

Eine weitere Ausführungsvariante der Erfindung kann vorsehen, dass jede fensterartige Aussparung einen angefasten unteren Begrenzungssteg aufweist, der eine Aussenfläche aufweist, die sich von der Aussparung schräg in Richtung des Mantels des Verschlussaufsatzes erstreckt. Bei dieser Ausführungsvariante der Aufnahmefenster für die Verriegelungsleisten, kommt es praktisch nur zu einem linienförmigen Kontakt des messerkantenartig ausgebildeten unteren Begrenzungsstegs mit der Sperrfläche einer Verriegelungsleiste. Bei Zug auf den Verschlussaufsatz erhöht sich die Verriegelungswirkung, da der messerkantenartig ausgebildete untere Begrenzungssteg sich in den Übergang zwischen Sperrfläche und Außenwandung des Behälterhalses verhakt oder verbeisst. Wird der Zug erhöht, kann die aufgebrachte Kraft zu einem Ausweichen des der fensterartigen Aussparung abgewandten Randes des unteren Begrenzungsstegs in Richtung des Mantels des Verschlussaufsatzes führen, wobei der abgewandte Rand zugleich die Begrenzung der Innenwandung bildet. Bei Erreichen einer vorbestimmten Zugkraft reisst der Begrenzungsteg bevorzugt aus einer seiner seitlichen Anbindungen an sich in Richtung der Kunststoffweithalsbehältermittelachse erstreckenden Holmen der fensterartigen Aussparung. Natürlich kann die Anbindung als Sollbruchstelle ausgebildet sein, die beispielsweise durch Materialausdünnung erzeugt werden kann.

Sollbruchstellen können jedoch grundsätzlich an jeder Position der fensterartigen Aussparung ausgebildet sein.

Der angefaste untere Begrenzungssteg jedes Aufnahmefensters kann eine in axiale Richtung gemessene Erstreckung besitzen, die etwa 1 mm bis etwa 10 mm beträgt. Die Schürze weist eine Wandstärke auf, die etwa 0,3 mm bis etwa 2,5 mm beträgt. In einem Ausführungsbeispiel der Erfindung beträgt die Wandstärke der Schürze 0,6 mm bis 0,8 mm. Bei diesen Abmessungen ist einerseits eine gute Verriegelung bei verhältnismässig geringen Montagekräften gewährleistet. Andererseits kommt es bei infolge der erforderlichen hohen Zugkräfte zur Überwindung der Verriegelung zu einer Zerstörung von unteren Begrenzungsstegen der Aufnahmefenster. Dadurch ist sichergestellt, dass ein einmal montierter und gewaltsam wieder abgelöster Verschlussaufsatz nicht erneut auf dem Behälterhals montiert und verriegelt werden kann. Auf diese Weise kann eine Manipulation am Behälter zuverlässig erkannt werden.

Damit eine lagegenaue Montage des Verschlussaufsatzes gewährleistet ist, erweist es sich von Vorteil, wenn jeder Zentriervorsprung gegenüber der Aussenwandung des Behälterhalses einen radialen Überstand aufweist, der etwa 0,5 mm bis etwa 5 mm beträgt.

Die Aussenkontur eines als Zentriervorsprung ausgebildeten Zentrierelements kann im Prinzip beliebig ausgebildet sein. Es erweist sich jedoch von Vorteil, wenn jeder Zentriervorsprung stiftartig mit im wesentlichen zylindrischer Aussenkontur ausgebildet ist. Die zylindrische Aussenkontur wirkt vorteilhaft mit der schlitzartigen Zentrieraufnahme zusammen. In einer alternativen Ausführungsvariante weist jeder Zentriervorsprung eine dreieckige Aussenkontur auf, wobei die Spitze des Dreiecks in Richtung der Behälteröffnung orientiert ist. Sowohl die zylindrische als auch die dreieckförmige Aussenkontur erweisen sich insbesondere in Verbindung mit einer Zentrieraufnahme von dreieckförmiger Kontur als besonders zweckmässig. Dabei besitzt die Zentrieraufnahme in der Regel an ihrer Mündung eine grössere Weite als an ihrem Ende. Dadurch können die Zentriervorsprünge sehr einfach in die Zentrieraufnahmen gleiten, auch wenn die Vorpositionierung des Verschlussaufsatzes in Bezug auf den Behälterhals nicht exakt erfolgt ist. Dies verringert den Aufwand für die Positionierung der Bauteile.

Der mit dem Verschlussaufsatz auszustattende Kunststoffweithalsbehälter kann prinzipiell nach verschiedensten Verfahren hergestellt sein. Zweckmässigerweise ist der Behälter in einem Extrusionsblasverfahren hergestellt. Dies erlaubt eine einfache blastechnische Ausformung der am Behälterhals angeordneten Verbindungselemente, insbesondere der Riegelleisten und der Zentriervorsprünge. Der Verschlussaufsatz ist bevorzugt in einem Spritzgiessverfahren hergestellt. Dabei können der Mantel des Verschlussaufsatzes und die Schürze aus gleichartigen aber auch aus voneinander verschiedenen Kunststoffen gespritzt sein.

Weitere Vorteile und Merkmale ergeben sich aus der nachfolgenden Beschreibung von Ausführungsbeispielen der Erfindung unter Bezugnahme auf die nicht massstabsgetreuen schematischen Zeichnungen.
- Fig. 1: zeigt einen in einem Extrusionsblasverfahren hergestellten Kunststoffweithalsbehälter für Schüttgut mit einem montierten Verschlussaufsatz in teilweise aufgeschnittener Ansicht;
- Fig. 2: zeigt eine Seitenansicht eines Halsabschnitts des Kunststoffweithalsbehälters gemäss Fig. 1;
- Fig. 3: zeigt eine Seitenansicht des Halsabschnitts des Kunststoffweithalsbehälters gemäss Fig. 2 mit angedeuteten Verriegelungsaufnahmen und Zentrierelementen des Verschlussaufsatzes;
- Fig. 4: zeigt eine Variante eines Kunststoffweithalsbehälters in einer Ansicht analog zu Fig. 3;
- Fig. 5: zeigt eine axial geschnittene Ansicht von bei montiertem Verschlussaufsatz miteinander zusammenwirkenden Verriegelungselementen; und
- Fig. 6: zeigt eine axial geschnittene Ansicht von bei montiertem Verschlussaufsatz miteinander zusammenwirkenden Zentrierelementen.

In den Figuren sind gleiche Bauteile bzw. Elemente jeweils mit den gleichen Bezugszeichen versehen.

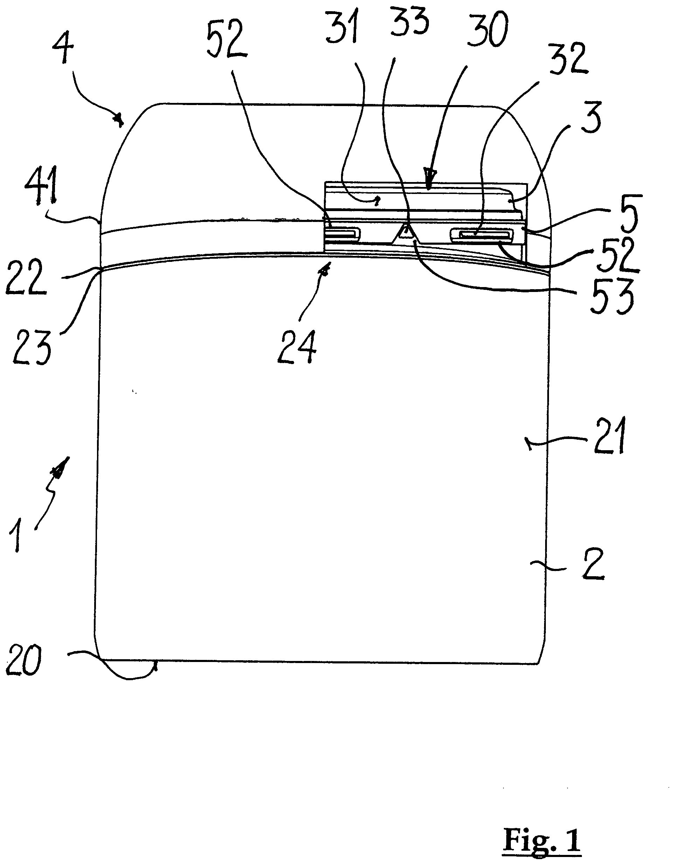

In Fig. 1 ist ein Kunststoffweithalsbehälter für Schuttgut, beispielsweise Zucker, Mehl, Kaffee, Pulver für Instant-Getränke, Milchpulver, Kleinkindnahrung usw., mit dem Bezugszeichen 1 versehen. Der Kunststoffweithalsbehälter 1 besitzt einen Behälterkörper 2, der einen kreisförmigen, eckigen oder einen von der Kreisform abweichenden Querschnitt aufweisen kann. Der Behälterkörper 2 ist an seinem einen Längsende mit einem Behälterboden 20 verschlossen. Am gegenüberliegenden Längsende geht der Behälterkörper 2 in einen Behälterhals 3 über, dessen Aussenwandung 31 einen kleineren Umfang aufweist als der Behälterkörper 2. Der Behälterhals 3 endet in einer relativ grossen Behälteröffnung 30, die beispielsweise das Entnehmen des Schüttguts mit einem Dosierlöffel oder dergleichen erlaubt. Eine vom Rand der Behälteröffnung 30 umschlossene Öffnungsfläche ist grösser als 30% einer Behälterfläche, die von einem Umfang 23 am Übergang der Behälterschulter 24 in eine Aussenwandung 21 des Behälterkörpers 2 begrenzt ist. Vorzugsweise beträgt die Öffnungsfläche 50% - 60% der Behälterfläche. Der beispielsweise dargestellte Kunststoffweithalsbehälter 1 ist gesamthaft in einem Extrusionsblasverfahren hergestellt.

Der Kunststoffweithalsbehälter 1 trägt einen gesamthaft mit dem Bezugszeichen 4 versehenen Verschlussaufsatz. Der Verschlussaufsatz 4 besitzt einen Mantel 41, der an die Aussenwandung 21 des Behälterkörpers 2 anschliesst. Bei dem in Fig. 1 dargestellten Ausführungsbeispiel schliesst der Mantel 41 des Verschlussaufsatzes 4 im wesentlichen bündig an die Aussenwandung 21 des Behälterkörpers 2 an und überlappt die Behälterschulter 24. Der Übergang vom Verschlussaufsatz 4 zum Behälterkörper 2 könnte auch abgestuft ausgebildet sein. Eine Trennfuge zwischen dem Verschlussaufsatz 4 und dem Behälterkörper 2 trägt das Bezugszeichen 22. Der Verschlussaufsatz 4 ist mit dem eigentlichen Verschluss für den Kunststoffweithalsbehälter 1 ausgestattet.

Dieser kann beispielsweise eine Verschlussklappe sein, die über ein Scharnier am Mantel 41 des Verschlussaufsatzes 4 angelenkt ist. In der Abbildung ist dieser Verschluss nicht näher dargestellt, da seine Ausgestaltung für das Wesen der Erfindung unerheblich ist. Der Verschlussaufsatz 4 ist im montierten Zustand axial fest mit dem Behälterkörper 2 verbunden und gegen eine relative Verdrehung gegenüber diesem gesichert. In dem aufgeschnittenen Bereich des Verschlussaufsatzes 4 sind Verriegelungselemente 32, 52 angedeutet, welche diese Funktion erfüllen. Die Verriegelungselemente bestehen in dem dargestellten Ausführungsbeispiel der Erfindung aus Verriegelungsvorsprüngen 32, die von einer Aussenwandung 31 des Behälterhalses 3 abragen und in korrespondierende Verriegelungsaufnahmen 52 eingreifen, die in einer Schürze 5 ausgespart sind, die im wesentlichen L-förmig von einer Innenwandung des Mantels 41 des Verschlussaufsatzes 4 abragt. Es sei erwähnt, dass an der Aussenwandung des Behälterhalses anstelle von Verriegelungsvorsprüngen auch Verriegelungsaufnahmen vorgesehen sein können. Entsprechend sind dann die korrespondierenden Verriegelungselemente an der Schürze als Verriegelungsvorprünge ausgebildet. Fig. 1 zeigt auch ein als ein Zentriervorsprung 33 ausgebildetes Zentrierelement, das in eine korrespondierende Zentrieraufnahme 53 in der Schürze 5 eingreift. Die miteinander korrespondierenden Verriegelungselemente 32 und 52 wie auch die miteinander korrespondierenden Zentrierelemente 33 und 53 erfüllen gleichzeitig auch die Funktion von Drehsicherungen. Die Zentrierelemente 33, 53 sind nicht zwingend erforderlich, um die Funktionalität des Kunststoffweithalsbehälters 1 aus dem Behälterkörper 2 und dem mit dem Behälterkörper 2 unlösbar verbundenen Verschlussaufsatz 4 sicherzustellen. Jedoch bieten die Zentrierelemente 33, 53 Vorteile bei der Montage des Verschlussaufsatzes 4 auf den Behälterkörper 2. In vorteilhafter Weise sind die Zentrierelemente 33, 53 derart ausgestaltet, dass sich zu Beginn der Montage der Verschlussaufsatz 4 auf den Behälterkörper 2 der Verschlussaufsatz 4 relativ zu dem Behälterkörper 2 in einem vorbestimmten Mass drehen lässt, obwohl die Zentrierelemente 33, 53 wenigstens zum Teil bereits in Eingriff miteinander sind. Mit zunehmenden Montagefortschritt wird auch die mögliche relative Drehung zwischen dem Behälterkörper 2 und dem Verschlussaufsatz 4 in einem vorbestimmten Ausmass reduziert, um nach Abschluss der Montage im Wesentlichen keine Drehung mehr zuzulassen. Durch die rotatorische Fixierung des Behälterkörpers 2 an den Verschlussaufsatz 4 durch die Zentrierelemente 33, 53 können die Verriegelungselemente 32, 52 von dieser Aufgabe befreit sein. Der Vollständigkeit halber sei noch erwähnt, dass bedingt durch Temperaturausdehnungskoeffizienten, Relaxation der verwendeten Kunststoffe und Fertigungstoleranzen immer noch eine unbeabsichtigte geringfügige relative Verdrehbarkeit zwischen dem Behälterkörper 2 und dem Verschlussaufsatz 4 möglich sein kann. Diese beeinträchtigt jedoch die Funktionalität des mit dem Verschlussaufsatz 4 versehenen Kunststoffweithalsbehälters 1 nicht. Der Verschlussaufsatz 4 ist üblicherweise in einem Spritzgiessverfahren hergestellt.

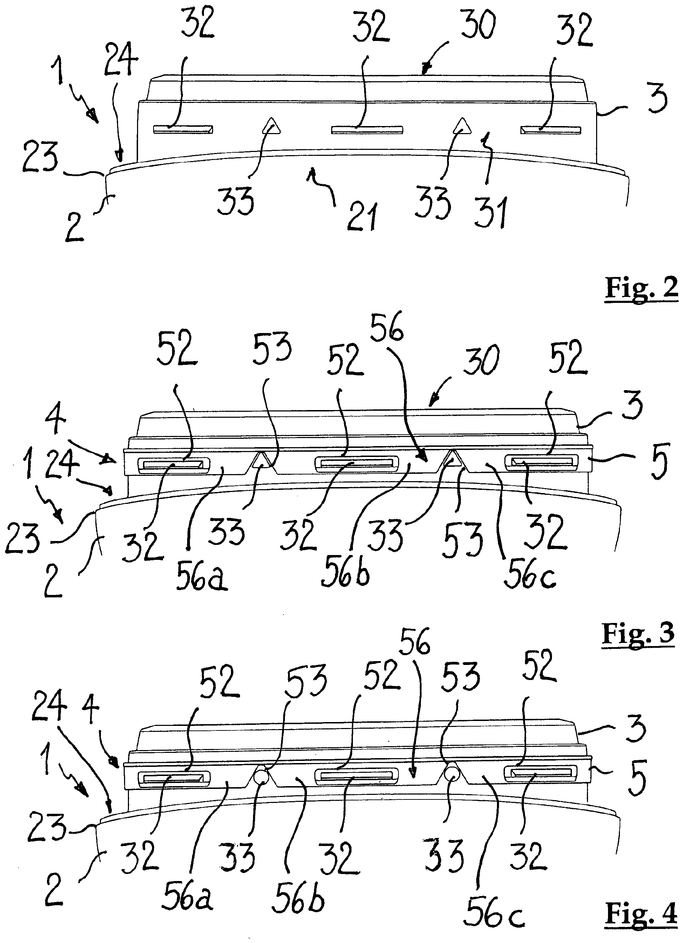

In Fig. 2 sind der Behälterhals 3 und die Behälterschulter 24 als Übergang zum Behälterkörper 2 des Kunststoffweithalsbehälters 1 dargestellt. Gleiche Elemente tragen die gleichen Bezugszeichen wie in Fig. 1. Die von der Aussenwandung 31 des Behälterhalses 3 radial abragenden Verriegelungsvorsprünge 32 sind als Verriegelungsleisten ausgebildet, die sich in Umfangsrichtung erstrecken. Zwischen den Verriegelungsleisten 32 sind die Zentriervorsprünge 33 angeordnet, die bei dem dargestellten Ausführungsbeispiel stiftförmig von der Aussenwandung 31 des Behälterhalses 3 abragen und eine im wesentlichen dreieckige Aussenkontur aufweisen. Die Verriegelungsleisten 32 und die Zentrierstifte 33 können wenigstens bereichsweise abwechselnd entlang des Behälterhalses 3 vorgesehen sein. Sie können, wie es in Fig. 2 dargestellt ist, auf gleicher axialer Höhe des Behälterhalses 3 angeordnet sein. Sie können aber auch in unterschiedlichen axialen Höhen des Behälterhalses 3 vorgesehen sein. Beispielsweise könnte einer der Zentrierstifte 33 näher in Richtung der Behälteröffnung 30 versetzt sein, um bei der Montage des Verschlussaufsatzes eine sehr frühe Vor-Ausrichtung zu gewährleisten.

Aus Fig. 2 ist ersichtlich, dass der Behälterhals 3 einen kleineren Umfang aufweist als der Behälterkörper 2. Die Behälterschulter 24 zwischen dem Behälterhals 3 und dem Behälterkörper 2 kann gestuft ausgebildet sein, um einen möglichst gleichmässigen Übergang des Mantels (41 in Fig. 1) des Verschlussaufsatzes (4 in Fig. 1) zur Aussenwandung 21 des Behälterkörpers 2 zu erzielen. Die Behälterschulter 24 ist in dem dargestellten Ausführungsbeispiel in Richtung des Behälterhalses 3 gekrümmt. Daraus ergibt sich für den Behälterhals 3 in einem mittleren Bereich seiner Längsseite eine geringere Länge als an den seitlichen Rändern. Die Behälterschulter 24 kann im Querschnitt gesehen kreisförmig oder in Richtung des Behälterbodens gekrümmt sein. Hinsichtlich des Verlaufes der Behälterschulter bestehen jedoch beliebige gestalterische Freiheiten.

Fig. 3 zeigt den Behälterkörper 2 aus Fig. 2 mit montiertem Verschlussaufsatz 4. Aus Gründen der besseren Übersicht wurde der Mantel (41 in Fig. 1) des Verschlussaufsatzes 4 weggelassen. Fig. 2 zeigt daher nur einen Abschnitt 56 der vom Mantel (41) des Verschlussaufsatzes 4 abragenden Schürze 5. Die von der Aussenwandung 31 des Behälterhalses 3 abragenden Verriegelungsleisten 32 sind in Eingriff mit den fensterartigen Verriegelungsaufnahmen 52 in der Schürze 5 und unlösbar damit verbunden. Desgleichen wirken die Zentriervorsprünge 33 mit den in der Schürze 5 vorgesehenen Zentrieraufnahmen 53 zusammen. Die Zentrieraufnahmen 53 sind dabei als schlitzartige Einschnitte ausgebildet, die am Rand der Schürze 5 breiter ausgebildet sind als an ihrem geschlossenen Ende. Beispielsweise besitzen sie, entsprechend der Aussenkontur der Zentriervorsprünge 33, eine im wesentlichen dreieckförmige Kontur. Die schlitzartigen Einschnitte unterteilen den dargestellten Abschnitt 56 der Schürze 5 in einzelne Segmente 56a, 56b, 56c, an denen je eine fensterartige Verriegelungsaufnahme 52 ausgebildet ist. Die Unterteilung des dargestellten Abschnitts 56 der Schürze 5 in einzelne Segmente 56a, 56b, 56c kann bewirken, dass die Segmente, hier beispielhaft das Segment 56b, aus ihrer Neutralstellung radial, also zum Mantel 41 hin oder vom Mantel 41 weg, ausgelenkt werden können, ohne dass ein benachbartes Segment, hier beispielhaft die Segmente 56a, 56c, hierdurch beeinflusst werden. Dadurch können die Montagekräfte gering gehalten werden, da ein Auslenken des einen Segments 56b nicht zu einem Auslenken oder auch Verspannen der benachbarten Segmente 56a, 56c, führt. Somit wird verhindert, dass durch Auslenken des einen Segments in Richtung zum Mantel 41 hin zumindest ein Teilbereich des benachbarten Segments kontraproduktiv in die Gegenrichtung, vom Mantel 41 weg,gedrückt wird, was bei der Montage zu einem zusätzlichen Kraftaufwand führen würde, um dieses benachbarte Segment in die ursprüngliche Neutralstellung zu verlagern. Ferner können sich die einzelnen voneinander unabhängig radial verlagerbaren Segmente 56a, 56b, 56c leichter entlang einer Kontur der Aussenwandung 31 des Behälterhalses 3 erstrecken und so beispielsweise Fertigungstoleranzen zwischen der Kontur der Schürze 5 und der Kontur der Aussenwandung 31 ausgleichen. Die Segmente 56a, 56b, 56c können auch derart gestaltet sein, dass sie nach der Montage unter Vorspannung an der Aussenwandung 31 des Behälterhalses 3 anliegen. Hierdurch kann zumindest teilweise verhindert werden, dass sich der Verschlussaufsatz 4 radial bezüglich des Behälterkörpers 2 bewegen lässt. Durch diese Vorspannung kann radiales Spiel unterbunden werden, das aufgrund von Relaxation der verwendeten Kunststoffe, von Temperaturkoeffizienten oder von Fertigungstoleranzen e radiales Spiel entstehen kann.

Fig. 4 zeigt eine schematische Darstellung einer Variante des Kunststoffweithalsbehälters 1 in einer Ansicht analog zu Fig. 3. Gleiche Elemente tragen wieder die gleichen Bezugszeichen wie in den vorangehenden Abbildungen. Der Unterschied des Behälterkörpers 2 von Fig. 4 zum Behälterkörper in Fig. 3 besteht in der Ausbildung der Zentriervorsprünge 33. Diese sind im dargestellten Ausführungsbeispiel als Zentrierstifte mit einer zylindrischen Aussenkontur bzw. mit einem kreisförmigen Querschnitt ausgebildet. Die übrigen Verriegelungs- und Zentrierelemente entsprechen denjenigen aus Fig. 3.

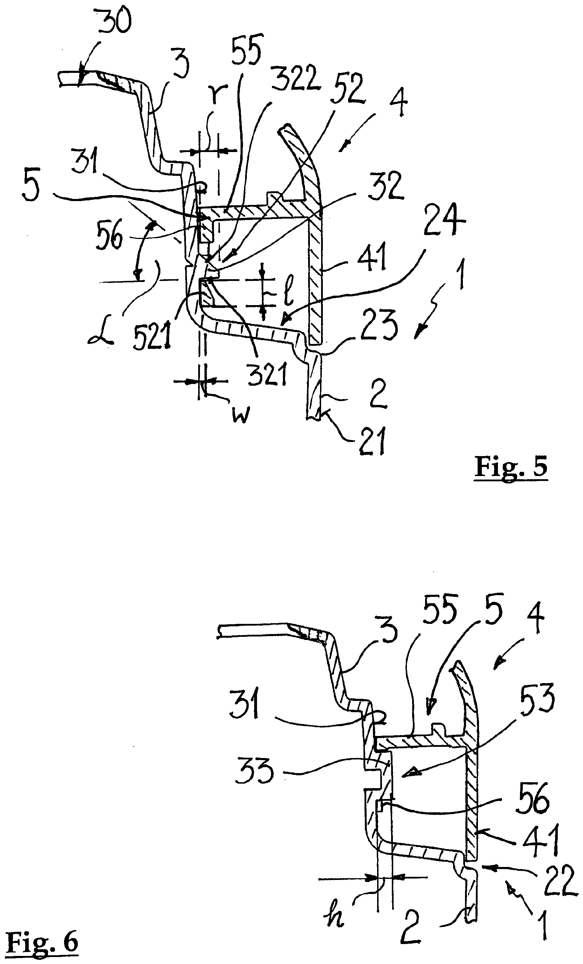

In der axial geschnittenen Darstellung der Fig. 5 trägt ein Kunststoffweithalsbehälter wiederum das Bezugszeichen 1. Der Behälterkörper ist mit 2 bezeichnet, der Behälterhals trägt das Bezugszeichen 3. In der Darstellung ist der auf den Behälterhals 3 montierte Verschlussaufsatz 4 angedeutet. Der Mantel 41 des Verschlussaufsatzes 4 geht im wesentlichen bündig in die Aussenwandung 21 des Behälterkörpers 2 über. Dabei ist ersichtlich, dass der gestufte Übergang vom Behälterhals 3 zum Behälterkörper 2 etwa der Wandstärke des Verschlussaufsatzes 4 entspricht. Zwischen dem Verschlussaufsatz 4 und dem Behälterkörper 2 ist eine Trennfuge 22 erkennbar. Aus der Darstellung ist ersichtlich, dass der Verriegelungsvorsprung 32 einen im wesentlichen dreieckigen Querschnitt aufweist. Der Verriegelungsvorsprung 32, üblicherweise eine Verriegelungsleiste, setzt sich aus einer im wesentlichen radial verlaufenden Sperrfläche 321 und einer Rampenfläche 322 zusammen. Die Rampenfläche 322 verläuft vom grössten radialen Überstand der Sperrfläche 321 gegenüber der Aussenwandung 31 des Behälterhalses 3 schräg in Richtung der Behälteröffnung 30 des Behälterhalses 3. Der grösste radiale Überstand r der Sperrfläche 321 beträgt etwa 0,5 mm bis etwa 5 mm . Dabei schliessen die Rampenfläche 322 und die Sperrfläche 321 miteinander einen Winkel α ein, der etwa 25° bis etwa 70° beträgt. Beispielsweise beträgt der Winkel α, wie dargestellt, etwa 45°. Die Nut in der Innenwandung des Behälterhalses 3, auf Höhe des Verriegelungsvorsprungs 32 ist eine Folge des Extrusionsblasens.

Wie aus Fig. 5 ersichtlich ist, besitzt die Schürze 5 eine etwa L-förmige Kontur. Dabei ist ein erster L-Schenkel 55 unlösbar mit dem Mantel 41 verbunden und ragt von diesem ab. Der erste L-Schenkel 55 ist mit einem zweiten L-Schenkel 56 verbunden, der sich von dem Mantel 41 beabstandet entlang der Aussenwandung 31 des Behälterhalses 3 erstreckt. Die fensterartige Verriegelungsaufnahme 52 im zweiten L-Schenkel 56 der Schürze 5 besitzt einen angefasten unteren Begrenzungssteg 521. Dazu erstreckt sich eine Aussenfläche des unteren Begrenzungsstegs 521 von der Aussparung schräg in Richtung des Mantels 41 des Verschlussaufsatzes 4. Bei der dargestellten Ausführungsvariante der Aufnahmefenster für die Verriegelungsleisten, kommt es zu einem annähernd linienförmigen Kontakt des messerkantenartig ausgebildeten unteren Begrenzungsstegs 521 mit der Sperrfläche 321 des Verriegelungsvorsprungs 32. Infolge der Neigung des angefasten Begrenzungsstegs 521 erhöht sich bei Zug die Verriegelungswirkung, da der zweite L-Schenkel 56 der Schürze 5 nach innen, in Richtung der Aussenwandung 31 des Behälterhalses 3 gezogen wird.

Der angefaste untere Begrenzungssteg 521 der fensterartigen Verriegelungsaufnahme 52 besitzt beispielsweise eine in axiale Richtung gemessene Erstreckung 1, die etwa 1 mm bis etwa 10 mm beträgt. Der untere Begrenzungssteg 521 weist eine minimale Wandstärke w auf, die etwa 0,1 mm bis etwa 2 mm beträgt. Bei diesen Abmessungen ist einerseits eine gute Verriegelung bei verhältnismässig geringen Montagekräften gewährleistet. Andererseits wird durch Aufbringen von hohen Zugkräften zur vermeintlichen Überwindung der Verriegelung der untere Begrenzungssteg 521 eines Aufnahmefensters 52 irreparabel zerstört. Dadurch ist sichergestellt, dass ein einmal montierter und gewaltsam wieder abgelöster Verschlussaufsatz 4 nicht erneut auf dem Behälterhals 3 montiert und verriegelt werden kann. Die beispielhaft dargestellte Anfasung des unteren Begrenzungsstegs 521 kann das Verhaken mit der Verriegelungsleiste 32 begünstigen. Es sei darauf hingewiesen, dass ein ausreichendes Verhaken auch ohne Anfasung des unteren Begrenzungsstegs auftreten kann.

Fig. 6 zeigt eine weitere axial geschnittene Darstellung eines mit einem Verschlussaufsatz 4 versehenen Kunststoffweithalsbehälters 1. Die Schnittlinie verläuft in diesem Fall durch einen Zentriervorsprung 33. Gleiche Elemente tragen wiederum die gleichen Bezugszeichen wie in der vorhergehenden Fig. 5. Bei montiertem Verschlussaufsatz 4 wirken der stiftartige Zentriervorsprung 33 und die Zentrieraufnahme 53 in der Schürze 5, die vom Mantel 41 des Verschlussaufsatzes 4 abragt, zusammen. Der Zentriervorsprung 33 kann eine dreieckige oder eine zylindrische Aussenkontur mit rundem Querschnitt aufweisen. Der radiale Überstand h des Zentriervorsprungs 33 gegenüber der Aussenwandung 31 des Behälterhalses 3 beträgt etwa 0,5 mm bis 3,5 mm. Die Zentrieraufnahme 53 besitzt beispielsweise eine dreieckige Kontur, was durch den nicht schraffierten Abschnitt der Schürze 5 angedeutet ist. Infolge der Krümmung des Kunststoffweithalsbehälters 1 bzw. des Verschlussaufsatzes 4 in Umfangsrichtung ist die Schürze 5 dabei nicht in ihrer vollen Wandstärke sichtbar. In einer alternativen Ausführungsvariante kann die Zentrieraufnahme 53 auch eine einfache rechteckige Kontur aufweisen. Die Nut in der Innenwandung des Behälterhalses 3, auf Höhe des Zentriervorsprungs 33 ist wiederum eine Folge des Extrusionsblasprozesses.

Die Erfindung ist am Beispiel eines Kunststoffweithalsbehälters 1 erläutert worden, dessen Behälterkörper 2 einen von der Kreisform abweichenden, länglich-ovalen Querschnitt aufweist. Es versteht sich jedoch, dass die Form des Behälterkörpers 2 auf die Funktion der Erfindung keinen Einfluss hat. Entsprechend kann der Behälterkörper 2 auch kreisförmig oder quadratisch ausgebildet sein. Erfindungswesentlich erscheint, dass die ineinander greifenden Verriegelungsvorsprünge 32 und Verriegelungsaufnahmen 52 gleichzeitig als eine unlösbare axiale Verriegelung wirken und als Verdrehsicherung dienen, sofern diese Funktionalität nicht durch die Zentrierelemente 33, 53 übernommen wird. Dadurch ist gerade bei nicht rotationssymmetrischen Behälterhälsen 3 und Verschlussaufsätzen 4 ein einfaches Demontieren des Verschlussaufsatzes 4 verhindert. Der montierte Verschlussaufsatz 4 ist nur durch Zerstörung eines oder mehrerer der Verriegelungselemente 32, 52 wieder abnehmbar, da diese verdeckt und daher von innen und aussen nicht zugängig sind. Dadurch können sie auch bei Zuhilfenahme eines Werkzeugs, beispielsweise eines Messers oder eines Schraubendrehers nicht mehr voneinander gelöst werden, ohne die Verbindung zu zerstören. Danach ist der Verschlussaufsatz 4 jedoch nicht mehr auf dem Behälterhals fixierbar. Dadurch kann eine allfällige Manipulation am Kunststoffweithalsbehälter 1 leicht festgestellt werden. Am Behälterhals 3 kann wenigstens ein Zentriervorsprung 33 vorgesehen sein, der mit einer Zentrieraufnahme 53 am Verschlussaufsatz 4 zusammenwirkt. Dadurch ist eine lagegenaue Montage des Verschlussaufsatzes 4 auf dem Kunststoffweithalsbehälter 1 gewährleistet. Somit ist auch bei rotationssymmetrischen Behälterhälsen 3 bzw. Verschlussaufsätzen 4 sichergestellt, dass auf dem Verschlussaufsatz 4 angeordnete Verschlüsse immer gleich ausgerichtet sind. Es sei auch noch darauf hingewiesen, dass auch eine alternative Anordnung von Verriegelungsvorsprüngen und Verriegelungsaufnahmen vorgesehen sein kann. Dann sind beispielsweise am Umfang des Behälterhalses Verriegelungsaufnahmen in Form von Vertiefungen oder Rücksprüngen in der Aussenwandung des Behälterhalses ausgebildet. Die korrespondierenden Verriegelungsvorsprünge sind dann am Mantel des Verschlussaufsatzes vorgesehen. Insbesondere können die Verriegelungsvorsprünge an der eine L-förmige Kontur aufweisenden Schürze ausgebildet sein, deren einer L-Schenkel fest mit der Innenwandung des Mantels verbunden ist und deren zweiter L-Schenkel sich entlang der Aussenwandung des Behälterhalses erstreckt. Die Schürze kann durch axiale Einschnitte in laschenförmige Segmente unterteilt sein, wobei vorzugsweise jedes Segment wenigstens einen Verriegelungsvorsprung aufweist. Die im Vorstehenden erläuterten Vorteile der Segmentierung der Schürze sind auch bei dieser Ausführungsvariante der Erfindung gewährleistet.

Der erfindungsgemäss ausgebildete Kunststoffweithalsbehälter ist gesamthaft in einem Extrusionsblasverfahren aus für das Extrusionsblasverfahren geeigneten Kunststoffen hergestellt. Der Verschlussaufsatz ist vorzugsweise in einem Spritzgiessverfahren hergestellt. Dabei können der Mantel des Verschlussaufsatzes und die Schürze auch aus unterschiedlichen Kunststoffen bestehen.

## Patentansprüche

1. Kunststoffweithalsbehälter für Schüttgut, mit einem Verschlussaufsatz, der auf einen eine Behälteröffnung (30) aufweisenden Behälterhals (3) des Kunststoffweithalsbehälters (1) montierbar und mit diesem verbindbar ist, wobei ein Mantel (41) des Verschlussaufsatzes (4) an eine Aussenwandung (21) eines Körpers (2) des Kunststoffweithalsbehälters (1) anschliesst, wobei an einer Aussenwandung (31) des Behälterhalses (3) eine Anzahl Verriegelungsvorsprünge (32) angeordnet ist, die über einen Umfang des Behälterhalses (3) verteilt sind und von der Aussenwandung (31) des Behälterhalses (3) abragen, und wobei der Verschlussaufsatz (4) an einer Innenwandung seines Mantels (41) mit korrespondierenden Verriegelungsaufnahmen (52) ausgestattet ist, die bei der Montage des Verschlussaufsatzes (4) auf den Behälterhals (3) mit den Verriegelungsvorsprüngen (32) derart in Eingriff bringbar sind, dass sie unlösbar miteinander verriegelt sind, und die zusammenwirkenden Verriegelungsvorspünge (32) und Verriegelungsaufnahmen (52) bei montiertem Verschlussaufsatz (4) unzugänglich sind, **dadurch gekennzeichnet, dass** der Kunststoffweithalsbehälter in einem Extrusionsblasverfahren hergestellt ist und, dass die Verriegelungsvorsprünge (32) jeweils als sich in Umfangsrichtung erstreckende Verriegelungsleisten ausgebildet sind, die mit die Verriegelungsaufnahmen (52) bildenden fensterartigen Aussparungen zusammenwirken, die in einer Schürze (5) vorgesehen sind, die von der Innenwandung des Mantels (41) des Verschlussaufsatzes (4) abragt.

2. Kunststoffweithalsbehälter mit einem Verschlussaufsatz nach Anspruch 1, **dadurch gekennzeichnet, dass** die Aussenwandung (31) des Behälterhalses (3) wenigstens ein erstes Zentrierelement (33) aufweist und am Mantel (41) des Verschlussaufsatzes (4) ein mit dem wenigstens einen ersten Zentrierelement (33) korrespondierendes zweites Zentrierelement (53) vorgesehen ist, wobei bei einer Montage des Verschlussaufsatzes (4) auf den Behälterhals (3) das wenigstens eine erste Zentrierelement (33) und das zweite Zentrierelement (53) miteinander derart in Eingriff bringbar sind, dass nach der Montage der Verschlussaufsatz (4) und der Behälterhals (3) zueinander zentriert sind.

3. Kunststoffweithalsbehälter mit einem Verschlussaufsatz nach Anspruch 2, **dadurch gekennzeichnet, dass** eine Anzahl erster Zentrierelemente (33) und eine entsprechende Anzahl korrespondierender zweiter Zentrierelemente (53) vorgesehen ist.

4. Kunststoffweithalsbehälter mit einem Verschlussaufsatz nach Anspruch 3, **dadurch gekennzeichnet, dass** die Verriegelungsvorsprünge (32) und die ersten Zentrierelemente (33) wenigstens bereichsweise abwechselnd entlang des Umfangs des Behälterhalses (3) angeordnet sind und die Verriegelungsaufnahmen (52) und die zweiten Zentrierelemente (53) wenigstens bereichsweise abwechselnd am Mantel (41) des Verschlussaufsatzes (4) vorgesehen sind.

5. Kunststoffweithalsbehälter nach einem der Ansprüche 2 - 4, **dadurch gekennzeichnet, dass** jedes erste Zentrierelement (33) als ein von der Aussenwandung (31) des Behälterhalses (3) abragender Zentriervorsprung ausgebildet ist, und dass jedes zweite Zentrierelement (53) als eine Zentrieraufnahme ausgebildet ist.

6. Kunststoffweithalsbehälter mit einem Verschlussaufsatz nach Anspruch 1, **dadurch gekennzeichnet, dass** die Verriegelungsleisten (32) im Axialschnitt eine im wesentlichen dreieckige Gestalt aufweisen und aus einer sich im wesentlichen radial verlaufenden Sperrfläche (321) und einer Rampenfläche (322) zusammengesetzt sind, welche Rampenfläche (322) sich von einem maximalen radialen Überstand der Verriegelungsleiste (32) gegenüber der Aussenwandung (31) des Behälterhalses (3) schräg in Richtung der Behälteröffnung (30) erstreckt.

7. Kunststoffweithalsbehälter mit einem Verschlussaufsatz nach Anspruch 6, **dadurch gekennzeichnet, dass** die radiale Sperrfläche (321) und die schräge Rampenfläche (322) miteinander einen Winkel (α) einschliessen, der 25° bis 75° beträgt.

8. Kunststoffweithalsbehälter mit einem Verschlussaufsatz nach einem der Ansprüche 1 bis 7, **dadurch gekennzeichnet, dass** die Verriegelungsleisten (32) einen maximalen radialen Überstand (r) aufweisen, der 0,5 mm bis 5 mm beträgt.

9. Kunststoffweithalsbehälter mit einem Verschlussaufsatz nach einem der Ansprüche 1 bis 8, **dadurch gekennzeichnet, dass** die von der Innenwandung des Mantels (41) des Verschlussaufsatzes (4) abragende Schürze (5) durch sich axial erstreckende Einschnitte in laschenartige Segmente (56a, 56b, 56c) unterteilt ist, wobei vorzugsweise jedes Segment (56a, 56b, 56c) eine Verriegelungsaufnahme (52) aufweist.

10. Kunststoffweithalsbehälter mit einem Verschlussaufsatz nach Anspruch 9, **dadurch gekennzeichnet, dass** die axialen Einschnitte derart angeordnet und ausgeführt sind, dass bei der Montage des Verschlussaufsatzes (4) auf den Behälterhals (3) jedes Segment (56b) unabhängig von seinen benachbarten Segmenten (56a, 56c) von einer ersten Position in eine zweite Position elastisch reversibel verlagerbar ist, wobei in der ersten Position der Verschlussaufsatz (4) zur Montage auf den Behälterhals (3) vorbereitet ist und in der zweiten Position das Segment (56a, 56b, 56c) während der Montage des Verschlussaufsatzes (4) auf den Behälterhals (3) durch ein Verriegelungselement (32, 52) maximal radial ausgelenkt ist.

11. Kunststoffweithalsbehälter mit einem Verschlussaufsatz nach Anspruch 9 oder 10, **dadurch gekennzeichnet, dass** die axial verlaufenden Einschnitte wenigstens zum Teil Zentrieraufnahmen (53) bilden.

12. Kunststoffweithalsbehälter mit einem Verschlussaufsatz nach Anspruch 11, **dadurch gekennzeichnet, dass** jede Zentrieraufnahme (53) eine im Wesentlichen gleichschenklige dreieckige Kontur aufweist, wobei die beiden gleichlangen Schenkel eine Spitze des Dreiecks ausbilden, die entgegen einer Montagerichtung des Verschlussaufsatzes (4) auf den Behälterhals (3) orientiert ist.

13. Kunststoffweithalsbehälter mit einem Verschlussaufsatz nach einem der Ansprüche 1 bis 12, **dadurch gekennzeichnet, dass** jede fensterartige Aussparung (52) einen angefasten unteren Begrenzungssteg (521) aufweist, der eine Aussenfläche aufweist, die sich von der Aussparung (52) schräg in Richtung des Mantels (41) des Verschlussaufsatzes (4) erstreckt.

14. Kunststoffweithalsbehälter mit einem Verschlussaufsatz nach Anspruch 13, **dadurch gekennzeichnet, dass** der angefaste untere Begrenzungssteg (521) eine in axiale Richtung gemessene Erstreckung (1) besitzt, die 1 mm bis 10 mm beträgt.

15. Kunststoffweithalsbehälter mit einem Verschlussaufsatz nach einem der Ansprüche 1 bis 14, **dadurch gekennzeichnet, dass** die Schürze eine Wandstärke (w) aufweist, die 0,3 mm bis 2,5 mm beträgt.

16. Kunststoffweithalsbehälter mit einem Verschlussaufsatz nach einem der Ansprüche 5 -15, **dadurch gekennzeichnet, dass** jeder Zentriervorsprung (33) gegenüber der Aussenwandung (31) des Behälterhalses (3) einen radialen Überstand (h) aufweist, der 0,5 mm bis 5 mm beträgt.

17. Kunststoffweithalsbehälter mit einem Verschlussaufsatz nach einem der Ansprüche 5 -16, **dadurch gekennzeichnet, dass** jeder Zentriervorsprung (33) stiftartig mit im wesentlichen zylindrischer Aussenkontur ausgebildet ist.

18. Kunststoffweithalsbehälter mit einem Verschlussaufsatz nach einem der Ansprüche 5 bis 16, **dadurch gekennzeichnet, dass** jeder Zentriervorsprung (33) eine dreieckige, vorzugsweise gleichschenkelige, Aussenkontur aufweist, wobei die Spitze des Dreiecks in Richtung der Behälteröffnung (30) orientiert ist.

## Claims

1. Wide-necked plastic container for bulk material, having a closure cap, which can be mounted on a container neck (3) of the wide-necked plastic container (1) that has a container opening (30) and can be connected to the latter, whereby a casing (41) of the closure cap (4) connects to an outside wall (21) of a body (2) of the wide-necked plastic container (1), wherein a number of locking projections (32), which are distributed over a periphery of the container neck (3) and project from the outside wall (31) of the container neck (3), is arranged on an outside wall (31) of the container neck (3), and wherein the closure cap (4) is equipped on an inside wall of its casing (41) with corresponding locking recesses (52), which during the mounting of the closure cap (4) on the container neck (3) can be engaged with the locking projections (32) in such a way that they are locked with one another in a non-detachable manner, and the interacting locking projections (32) and locking recesses (52) are inaccessible in the mounted closure cap (4) **characterized in that** the plastic container is produced using an extrusion-blow-molding method and that the locking projections (32) are designed in each case as locking strips that extend in the peripheral direction and that interact with the window-like recesses that form the locking recesses (52), which window-like recesses are provided in a skirt (5) that projects from the inside wall of the casing (41) of the closure cap (4).

2. Wide-necked plastic container with a closure cap according to Claim 1, wherein the outside wall (31) of the container neck (3) has at least a first centering element (33), and a second centering element (53) that corresponds to the at least one first centering element (33) is provided on the casing (41) of the closure cap (4), whereby in a mounting of the closure cap (4) on the container neck (3), the at least one first centering element (33) and the second centering element (53) can be engaged with one another in such a way that after the mounting, the closure cap (4) and the container neck (3) are centered in one another.

3. Wide-necked plastic container with a closure cap according to Claim 2, wherein a number of first centering elements (33) and an equivalent number of corresponding second centering elements (53) is provided.

4. Wide-necked plastic container with a closure cap according to Claim 3, wherein the locking projections (32) and the first centering elements (33) are arranged alternately at least in certain areas along the periphery of the container neck (3), and the locking recesses (52) and the second centering elements (53) are provided alternately at least in certain areas on the casing (41) of the closure cap (4).

5. Wide-necked plastic container according to one of Claims 2 - 4, wherein each first centering element (33) is designed as a centering projection that projects from the outside wall (31) of the container neck (3), and wherein each second centering element (53) is designed as a centering recess.

6. Wide-necked plastic container with a closure cap according to Claim 1, wherein the locking strips (32) in the axial section have an essentially triangular shape and consist of an essentially radial locking surface (321) and a sloped surface (322), which sloped surface (322) extends from a maximum radial protrusion of the locking strip (32) opposite the outside wall (31) of the container neck (3) obliquely in the direction of the container opening (30).

7. Wide-necked plastic container with a closure cap according to Claim 6, wherein the radial locking surface (321) and the oblique sloped surface (322) enclose an angle (α) with one another, which is 25° to 75°.

8. Wide-necked plastic container with a closure cap according to one of Claims 1 to 7, wherein the locking strips (32) have a maximum radial protrusion (r), which is 0.5 mm to 5 mm.

9. Wide-necked plastic container with a closure cap according to one of Claims 1 to 8, wherein the skirt (5) that projects from the inside wall of the casing (41) of the closure cap (4) is divided by axially extending indentations into strap-like segments (56a, 56b, 56c), whereby preferably each segment (56a, 56b, 56c) has a locking recess (52).

10. Wide-necked plastic container with a closure cap according to Claim 9, wherein the axial indentations are arranged and embodied in such a way that in the mounting of the closure cap (4) on the container neck (3), any segment (56b), independently of its adjacent segments (56a, 56c), can be moved elastically reversibly from a first position into a second position, whereby in the first position, the closure cap (4) is prepared for mounting on the container neck (3), and in the second position, the segment (56a, 56b, 56c) is maximally radially deflected during the mounting of the closure cap (4) on the container neck (3) by a locking element (32, 52).

11. Wide-necked plastic container with a closure cap according to Claim 9 or 10, wherein the axial indentations at least in part form centering recesses (53) .

12. Wide-necked plastic container with a closure cap according to Claim 11, wherein each centering recess (53) has an essentially equilateral triangular contour, whereby the two legs of the same length form a tip of the triangle, which is oriented to the container neck (3) opposite a mounting direction of the closure cap (4) .

13. Wide-necked plastic container with a closure cap according to one of Claims 1 to 12, wherein each window-like recess (52) has a chamfered lower boundary arm (521), which has an outside surface that extends from the recess (52) obliquely in the direction of the casing (41) of the closure cap (4).

14. Wide-necked plastic container with a closure cap according to Claim 13, wherein the chamfered lower boundary arm (521) has an extension (1) that is measured in the axial direction and that is 1 mm to 10 mm.

15. Wide-necked plastic container with a closure cap according to one of Claims 1 to 14, wherein the skirt has a wall thickness (w) that is 0.3 mm to 2.5 mm.

16. Wide-necked plastic container with a closure cap according to one of Claims 5 - 16, wherein each centering projection (33) has a radial protrusion (h) relative to the outside wall (31) of the container neck (3) ), which is 0.5 mm to 5 mm,.

17. Wide-necked plastic container with a closure cap according to one of Claims 5 - 16, wherein each centering projection (33) is designed in a pin-like manner with an essentially cylindrical outside contour.

18. Wide-necked plastic container with a closure cap according to one of Claims 5 to 16, wherein each centering projection (33) has a triangular, preferably equilateral, outside contour, whereby the tip of the triangle is oriented in the direction of the container opening (30).

## Revendications

1. Récipient à col large en matière plastique pour produit en vrac, comprenant un couvercle de fermeture qui peut être monté sur un col de récipient (3) du récipient à col large en matière plastique (1), présentant une ouverture de récipient (30), et peut être lié à celui-ci, sachant qu'une enveloppe (41) du couvercle de fermeture (4) se raccorde à une paroi externe (21) d'un corps (2) du récipient à col large en matière plastique (1), sachant qu'un certain nombre de saillies de verrouillage (32) sont disposées sur une paroi externe (31) du col de récipient (3), qui sont réparties sur un pourtour du col de récipient (3) et s'élèvent à partir de la paroi externe (31) du col de récipient (3), et sachant que le couvercle de fermeture (4) est muni, sur une paroi interne de son enveloppe (41), de logements de verrouillage (52) correspondants qui, lors du montage du couvercle de fermeture (4) sur le col de récipient (3), peuvent être amenés en prise avec les saillies de verrouillage (32) de manière à ce qu'ils soient verrouillés entre eux de façon non libérable, et que, lorsque le couvercle de fermeture (4) est monté, les saillies de verrouillage (32) et les logements de verrouillage (52) qui coopèrent ne sont pas accessibles, **caractérisé en ce que** le récipient à col large en matière plastique est fabriqué selon un procédé d'extrusion-soufflage, et **en ce que** les saillies de verrouillage (32) sont réalisées respectivement sous la forme de nervures de verrouillage qui s'étendent dans la direction périphérique et coopèrent avec des évidements en forme de fenêtres constituant les logements de verrouillage (52) qui sont prévus dans une jupe (5) qui s'étend à partir de la paroi interne de l'enveloppe (41) du couvercle de fermeture (4).

2. Récipient à col large en matière plastique comprenant un couvercle de fermeture selon la revendication 1, **caractérisé en ce que** la paroi externe (31) du col de récipient (3) présente au moins un premier élément de centrage (33) et qu'il est prévu sur l'enveloppe (41) du couvercle de fermeture (4), un deuxième élément de centrage (53) qui correspond au premier élément de centrage (33), au nombre d'au moins un, sachant que lors d'un montage du couvercle de fermeture (4) sur le col de récipient (3), le premier élément de centrage (33), au nombre d'au moins un, et le deuxième élément de centrage (53) peuvent être amenés en prise l'un avec l'autre de manière à ce que, après le montage, le couvercle de fermeture (4) et le col de récipient (3) soient centrés l'un par rapport à l'autre.

3. Récipient à col large en matière plastique comprenant un couvercle de fermeture selon la revendication 2, **caractérisé en ce qu'**il est prévu un certain nombre de premiers éléments de centrage (33) et un nombre approprié de deuxièmes éléments de centrage (53) correspondants.

4. Récipient à col large en matière plastique comprenant un couvercle de fermeture selon la revendication 3, **caractérisé en ce que** les saillies de verrouillage (32) et les premiers éléments de centrage (33) sont disposés, au moins dans certaines parties, en alternance le long du pourtour du col de récipient (3), et les logements de verrouillage (52) et les deuxièmes éléments de verrouillage (53) sont prévus, au moins dans certaines parties, en alternance sur l'enveloppe (41) du couvercle de fermeture (4).

5. Récipient à col large en matière plastique selon l'une des revendications 2 à 4, **caractérisé en ce que** chaque premier élément de centrage (33) est réalisé sous la forme d'une saillie de centrage s'élevant depuis la paroi externe (31) du col de récipient (3), et **en ce que** chaque deuxième élément de centrage (53) est réalisé sous la forme d'un logement de centrage.

6. Récipient à col large en matière plastique comprenant un couvercle de fermeture selon la revendication 1, **caractérisé en ce que** les nervures de verrouillage (32) présentent en coupe axiale une forme sensiblement triangulaire et sont constituées d'une surface de blocage (321), s'étendant de façon sensiblement radiale, et d'une surface de rampe (322), laquelle surface de rampe (322) s'étend à partir d'une projection radiale maximale de la nervure de verrouillage (32) par rapport à la paroi externe (31) du col de récipient (3), en biais en direction de l'ouverture de récipient (30).

7. Récipient à col large en matière plastique comprenant un couvercle de fermeture selon la revendication 6, **caractérisé en ce que** la surface de blocage (321) radiale et la surface de rampe (322) oblique forment entre elles un angle (α) qui est compris entre 25° et 75°.

8. Récipient à col large en matière plastique comprenant un couvercle de fermeture selon l'une des revendications 1 à 7, **caractérisé en ce que** les nervures de verrouillage (32) présentent une projection radiale (r) maximale qui est comprise entre 0,5 mm et 5 mm.

9. Récipient à col large en matière plastique comprenant un couvercle de fermeture selon l'une des revendications 1 à 8, **caractérisé en ce que** la jupe (5) qui fait saillie depuis la paroi interne de l'enveloppe (41) du couvercle de fermeture (4) est divisée en segments (56a, 56b, 56c) en forme de languettes par des encoches s'étendant dans la direction axiale, chaque segment (56a, 56b, 56c) présentant de préférence un logement de verrouillage (52).

10. Récipient à col large en matière plastique comprenant un couvercle de fermeture selon la revendication 9, **caractérisé en ce que** les encoches axiales sont disposées et réalisées de manière à ce que lors du montage du couvercle de fermeture (4) sur le col de récipient (3), chaque segment (56b) puisse être déplacé de façon élastiquement réversible d'une première position dans une deuxième position, indépendamment de ses segments (56a, 56c) voisins, sachant que dans la première position, le couvercle de fermeture (4) est préparé pour le montage sur le col de récipient (3), et dans la deuxième position, le segment (56a, 56b, 56c) est soumis à une déviation radiale maximale par un élément de verrouillage (32, 52), pendant le montage du couvercle de fermeture (4) sur le col de récipient (3).

11. Récipient à col large en matière plastique comprenant un couvercle de fermeture selon la revendication 9 ou 10, **caractérisé en ce que** les encoches qui s'étendent axialement forment au moins en partie des logements de centrage (53).

12. Récipient à col large en matière plastique comprenant un couvercle de fermeture selon la revendication 11, **caractérisé en ce que** chaque logement de centrage (53) présente un contour triangulaire sensiblement isocèle, sachant que les deux côtés de même longueur forment une pointe du triangle qui est orientée en sens inverse d'une direction de montage du couvercle de fermeture (4) sur col de récipient (3).

13. Récipient à col large en matière plastique comprenant un couvercle de fermeture selon l'une des revendications 1 à 12, **caractérisé en ce que** chaque évidement (52) en forme de fenêtre présente une aile de délimitation (521) inférieure chanfreinée qui a une surface extérieure s'étendant depuis l'évidement (52) en biais en direction de l'enveloppe (41) du couvercle de fermeture (4).

14. Récipient à col large en matière plastique comprenant un couvercle de fermeture selon la revendication 13, **caractérisé en ce que** l'aile de délimitation (521) inférieure chanfreinée présente une dimension (1) mesurée dans la direction axiale, qui est comprise entre 1 mm et 10 mm.

15. Récipient à col large en matière plastique comprenant un couvercle de fermeture selon l'une des revendications 1 à 14, **caractérisé en ce que** la jupe présente une épaisseur de paroi (w) qui est comprise entre 0,3 mm et 2,5 mm.

16. Récipient à col large en matière plastique comprenant un couvercle de fermeture selon l'une des revendications 5 à 15, **caractérisé en ce que** chaque saillie de centrage (33) présente par rapport à la paroi externe (31) du col de récipient (3), une projection radiale (h) qui est comprise entre 0,5 mm et 5 mm.

17. Récipient à col large en matière plastique comprenant un couvercle de fermeture selon l'une des revendications 5 à 16, **caractérisé en ce que** chaque saillie de centrage (33) est réalisée sous forme de tige avec un contour extérieur sensiblement cylindrique.

18. Récipient à col large en matière plastique comprenant un couvercle de fermeture selon l'une des revendications 5 à 16, **caractérisé en ce que** chaque saillie de centrage (33) présente un contour extérieur triangulaire, de préférence isocèle, la pointe du triangle étant orientée en direction de l'ouverture de récipient (30).
